# EUROPÄISCHE PATENTSCHRIFT

(11) **EP 2 960 555 B1**
(45) Veröffentlichungstag und Bekanntmachung des Hinweises auf die Patenterteilung: **30.06.2021**
(21) Anmeldenummer: 15169528.5
(22) Anmeldetag: 28.05.2015
(51) Int. Cl.: F16J 15/3288, F01D 11/00

(54) **BÜRSTENDICHTUNGSSYSTEM ZUM ABDICHTEN EINES SPALTS ZWISCHEN RELATIV ZUEINANDER BEWEGBAREN BAUTEILEN EINER STRÖMUNGSMASCHINE**
BRUSH SEAL SYSTEM FOR SEALING A GAP BETWEEN COMPONENTS OF A TURBOMACHINE WHICH CAN BE MOVED RELATIVE TO EACH OTHER
SYSTÈME DE JOINT À BROSSE POUR SCELLER UN INTERVALLE ENTRE LES ÉLÉMENTS D'UNE TURBOMACHINE QUI PEUVENT ÊTRE DÉPLACÉS LES UNS PAR RAPPORT AUX AUTRES

(30) Priorität: 25.06.2014 DE 102014212174
(43) Veröffentlichungstag der Anmeldung: 30.12.2015
(73) Patentinhaber: MTU Aero Engines AG, 80995 München (DE)
(72) Erfinder: Weber, Julian, 80797 München (DE)

(56) Entgegenhaltungen:
- EP-A1- 2 722 486
- EP-A1- 2 846 067
- EP-A1- 2 857 721
- EP-A2- 1 347 218
- WO-A1-2004/101957

## Beschreibung

Die Erfindung betrifft ein Bürstendichtungssystem zum Abdichten eines Spalts zwischen relativ zueinander bewegbaren Bauteilen einer Strömungsmaschine, insbesondere einer thermischen Gasturbine, umfassend ein Bürstendichtungsgehäuse, welches zumindest einen Bürstenkopf einer Bürstendichtung aufnimmt, wobei das Bürstendichtungsgehäuse ein erstes Blechbauteil mit einem Deckblechabschnitt und ein zweites Blechbauteil mit einem Stützblechabschnitt umfasst. Die Erfindung betrifft weiterhin ein eine thermische Gasturbine mit einem derartigen Bürstendichtungssystem.

Aus dem Stand der Technik sind verschiedene Bürstendichtungssysteme für Strömungsmaschinen, insbesondere thermische Gasturbinen bekannt. Dabei gibt es Vielzahl von Anwendungsfällen, in welchen zwei relativ zueinander bewegliche Teile nicht-hermetisch gegeneinander abzudichten sind. Ein derartiger Anwendungsfall ist zum Beispiel die Abdichtung eines gasdurchströmten, ringförmigen Spalts zwischen einem Stator und einem Rotor einer Gasturbine für ein Flugzeug. Zur nicht-hermetischen Abdichtung ringförmiger Zwischenräume zwischen relativ zueinander rotierenden Baugruppen werden dabei häufig Bürstendichtungssysteme verwendet, da Bürstendichtungssysteme bei gleicher Dichtwirkung leichter und kompakter sind als Labyrinthdichtungen. Beispielsweise offenbart die US 2002/0020968 A1 unterschiedliche Bürstendichtungssysteme für Flugzeugtriebwerke. Die Bürstendichtungssysteme umfassen jeweils ein mehrteiliges Bürstendichtungsgehäuse, das die eigentliche Bürstendichtung bereichsweise aufnimmt und lagesichert. Jedes Bürstendichtungsgehäuse besteht hierzu zumindest aus einem Stützblech und einem Deckblech, die miteinander verbunden werden und zusammen zumindest einen Bürstenkopf des Bürstendichtungssystems U-förmig umgreifen und gegen ein Herausfallen aus dem Bürstendichtungsgehäuse sichern. Das Deckblech bzw. der in Strömungsrichtung stromauf liegende Bereich des zweiteiligen Bürstendichtungsgehäuses soll in erster Linie störende Strömungseinflüsse auf ein vom Bürstenkopf ab- und aus dem Bürstendichtungsgehäuse herausragendes Bürstenpaket abhalten, während das in Strömungsrichtung betrachtet stromab liegende Stützblech des Bürstendichtungsgehäuses als Stützelement dient, das ein Durchbiegen des Bürstenpakets in axialer Richtung des Flugzeugtriebwerks aufgrund der Druckdifferenz über das Bürstendichtungsgehäuse verhindern soll. Bekannt sind auch einteilige Bürstendichtungsgehäuse, die im Querschnitt ebenfalls zumindest annähernd U-förmig ausgebildet sind.

Aus der Druckschrift EP 1 347 218 A2 ist eine Bürstendichtung bekannt. Zwei aneinander gepresste, ringförmige Platten, die zueinander weisende Nuten besitzen, bilden die Einfassung für einen ringförmigen Bürstenkopf. Eine der beiden Platten übt darüber hinaus in axialer Richtung eine Stützfunktion für die Bürste aus. Aus der nachveröffentlichten Druckschrift EP 2 846 067 A1 ist eine Bürstendichtungsanordnung mit einem Halteblech und einer Stutzvorrichtung und einem dazwischen angeordneten Befestigungsabschnitt bekannt. US 2002/0020968 A1 zeigt in einem Ausführungsbeispiel ein gattungsgemäßes Bürstendichtungssystem einer Strömungsmaschine mit einem eine Fischmauldichtung bildenden Deckblechabschnitt eines ersten Blechbauteils und mit einem der Bürste dienenden Stützelement mit einem Stützabschnitt eines zweiten Blechbauteils. Das zweite Blechbauteil weist dabei einen Befestigungsabschnitt zur Befestigung des Bürstendichtungssystems an einer Leitschaufel der Strömungsmaschine auf.

Als nachteilig an den bekannten Bürstendichtungssystemen ist allerdings der Umstand anzusehen, dass diese üblicherweise separat ausgebildete Bürstendichtungsgehäuse aufweisen, die einen vergleichsweise großen Bauraum benötigen, der nicht in jeder Strömungsmaschine und insbesondere in jeder Triebwerksanwendung vorhanden ist.

Aufgabe der vorliegenden Erfindung ist es daher, ein Bürstendichtungssystem der eingangs genannten Art bereitzustellen, welches derart ausgebildet ist, dass es einen vergleichsweise kleinen Bauraum beim Einbau in eine Strömungsmaschine benötigt und verbesserte mechanische Eigenschaften aufweist. Eine weitere Aufgabe der Erfindung ist es, eine thermische Gasturbine mit einem derartigen Bürstendichtungssystem anzugeben.

Diese Aufgaben werden erfindungsgemäß durch ein Bürstendichtungssystem mit den Merkmalen des Patentanspruchs 1 und durch eine thermische Gasturbine gemäß Patentanspruch 7 gelöst. Vorteilhafte Ausgestaltungen mit zweckmäßigen Weiterbildungen der Erfindung sind in den jeweiligen Unteransprüchen angegeben.

Ein erster Aspekt der Erfindung betrifft ein Bürstendichtungssystem zum Abdichten eines Spalts zwischen relativ zueinander bewegbaren Bauteilen einer Strömungsmaschine, insbesondere einer thermischen Gasturbine. Insbesondere soll ein Spalt zwischen einem Rotor und einem Stator einer thermischen Gasturbine wie einem Flugtriebwerk abgedichtet werden. Das erfindungsgemäße Bürstendichtungssystem umfasst hierzu ein Bürstendichtungsgehäuse, welches zumindest einen Bürstenkopf einer Bürstendichtung aufnimmt, wobei das Bürstendichtungsgehäuse ein erstes Blechbauteil mit einem Deckblechabschnitt und ein zweites Blechbauteil mit einem Stützblechabschnitt umfasst. Dabei weist das erste Blechbauteil an einem dem Deckblechabschnitt gegenüberliegenden Ende einen Axialflansch zur Ausbildung einer Fischmauldichtung auf. Durch die Integration von Bürstendichtungsgehäuse und Fischmauldichtung in einem Bauteil erhält dieses eine Doppelfunktion, was zu einer deutlichen Verringerung des benötigten Bauraums im Vergleich zu separat ausgebildeten Bürstendichtungsgehäusen und Fischmauldichtungen führt. Der Axialflansch fungiert beispielhaft als Deflektor der Fischmauldichtung. Dem Axialflansch radial nach außen und gegenüber liegt eine radial innere Plattform einer Leitschaufelanordnung mit einer oder mehreren Leitschaufeln, an der das Bürstendichtungssystem befestigt ist. Radial zwischen der inneren Plattform der Leitschaufelanordnung und dem Axialflansch kann ein Axialflansch einer stromaufwärts angeordneten und benachbarten Laufschaufelanordnung mit einer oder mehreren Laufschaufeln angeordnet sein. Durch die Verwendung von Blechbauteilen ist zudem ein Leichtbau möglich, der durch die Blechbauweise kostengünstig ausführbar ist. Insbesondere eignet sich das erfindungsgemäße Bürstendichtungssystem für die Integration einer Bürstendichtung in einer Zwischenstufendichtung einer Strömungsmaschine, insbesondere einer thermischen Gasturbine, unter leichtbautechnischem Aspekt.

In dem erfindungsgemäßen Bürstendichtungssystem umfasst das zweite Blechbauteil an einem dem Stützblechabschnitt gegenüberliegenden Ende einen Befestigungsabschnitt zur mittelbaren oder unmittelbaren Befestigung des Bürstendichtungssystems an einer Leitschaufel, einem Leitschaufelcluster oder einem Leitschaufelkranz der Strömungsmaschine. Neben der Ausbildung einer Bürstendichtung und eines Teilelements der Fischmauldichtung kann durch diese Ausgestaltung des erfindungsgemäßen Bürstendichtungssystems dieses über den Befestigungsabschnitt des zweiten Blechbauteils zudem eine Befestigungsfunktion übernehmen. Dieser integrierte Aufbau des erfindungsgemäßen Bürstendichtungssystems kann vorteilhafterweise die Verwendung von separat ausgebildeten Bürstendichtungsgehäusen, Fischmauldichtungen und Befestigungsvorrichtungen für das Bürstendichtungssystem an einer Leitschaufel, einem Leitschaufelcluster oder einem Leitschaufelkranz ersetzen. Insbesondere ergeben sich hierbei Vorteile durch die geringe Anzahl von Bauteilen mit wenigen Fügeoperationen. Dadurch sind auch neue, schnellere und effizientere Fertigungsverfahren möglich, die relativ rasch serientauglich sind. Zudem ist es möglich, einzelne Komponenten separat auszutauschen, wodurch sich die Reparaturfähigkeit des Gesamtsystems deutlich erhöht. Des Weiteren ist eine Dichtheit und Robustheit des erfindungsgemäßen Bürstendichtungssystems gewährleistet. Durch die Verwendung konventioneller Werkstoffe, nämlich Blechen, ergibt sich eine hervorragende geometrische Skalierbarkeit des herzustellenden, erfindungsgemäßen Bürstendichtungssystems.

Indem das Bürstendichtungsgehäuse mehrteilig, insbesondere zweiteilig ausgebildet ist, kann die konstruktive Gestaltungsfreiheit des erfindungsgemäßen Bürstendichtungssystems zusätzlich gesteigert werden.

In dem erfindungsgemäßen Bürstendichtungssystem umfasst dieses mindestens ein Versteifungselement, welches am zweiten Blechbauteil im Bereich des Stützblechabschnitts festgelegt ist. Dadurch können die mechanischen Eigenschaften des Bürstendichtungssystems können deutlich verbessert werden.

Der Stützblechabschnitt des zweiten Blechbauteils weist ein Stützelement zur Anlage an einem Bürstenpaket der Bürstendichtung auf. Dadurch wird ein Durchbiegen des Bürstenpakets in axialer Richtung des Flugzeugtriebwerks zuverlässig verhindert. Dabei ist das Stützelement einstückig mit dem Stützblechabschnitt ausgebildet.

In einer weiteren vorteilhaften Ausgestaltung der Erfindung ist vorgesehen, dass das Versteifungselement als gebogenes Metallblech ausgebildet ist und/oder dass das Versteifungselement mit dem zweiten Blechbauteil des Bürstendichtungsgehäuses vernietet ist und/oder dass zwischen dem Versteifungselement und dem zweiten Blechbauteil des Bürstendichtungsgehäuses wenigstens ein Gleitelement, insbesondere ein Gleitstein angeordnet ist. Indem das Versteifungselement als gebogenes Metallblech ausgebildet ist, kann auf konstruktiv einfache und kostengünstige Weise eine federnd nachgiebige Versteifung des Bürstendichtungsgehäuses erzielt werden. Indem das Versteifungselement mit dem zweiten Blechbauteil des Bürstendichtungsgehäuses vernietet ist, wird auf konstruktiv einfache und kostengünstige Art eine form- und/oder kraftschlüssige Verbindung zwischen dem Versteifungselement und dem Bürstendichtungsgehäuse insgesamt erzielt. Durch das Anordnen eines Gleitsteins zwischen dem Versteifungselement und dem zweiten Blechbauteil des Bürstendichtungsgehäuses wird auf konstruktiv einfache Art eine Lagerstelle mit einem translatorischen Freiheitsgrad zur die Speicherzentrierung des Bürstendichtungssystems gewährleistet. Die Lagerstelle wird dabei durch das Gleitelement, insbesondere einen Gleitstein gebildet, wobei der Gleitstein im montierten Zustand des Bürstendichtungssystems in eine entsprechende Nut von beispielsweise einer Leitschaufel oder eines Leitschaufelclusters eingreift. Durch die Speicherzentrierung sind durch thermische Einflüsse bedingte relative Maßänderungen zwischen den koaxial angeordneten, sowie gegeneinander abzudichtenden Bauteilen - also zwischen einem Stator und einem Rotor - besser ausgleichbar. Das oder die Gleitelemente, insbesondere die Gleitsteine, können als separate Baugruppen ausgebildet sein und zum Beispiel durch Nieten mit dem Versteifungselement verbunden sein.

In weiteren vorteilhaften Ausgestaltungen des erfindungsgemäßen Bürstendichtungssystems können das erste und zweite Blechbauteil als separate Bauteile oder einstückig ausgebildet sein. Dabei kann eine Ausbildung als separate Bauteile zu einem vereinfachten Austausch oder Reparatur der Einzelteile oder des Bürstendichtungssystems insgesamt führen. Das erste und zweite Blechbauteil können dabei formschlüssig und/oder stoffschlüssig miteinander verbunden sein. Eine einstückige Ausgestaltung des ersten und zweiten Blechbauteils verringert die Anzahl der einzubauenden Teile, wodurch sich ein Zeitvorteil bei der Herstellung und dem Einbau des Bürstendichtungssystems ergibt.

In einer weiteren vorteilhaften Ausgestaltung des erfindungsgemäßen Bürstendichtungssystems umfasst das Versteifungselement an einem dem Anlageelement gegenüberliegenden Ende einen Axialflansch zur Ausbildung einer weiteren, bezogen auf die Lage der mit dem ersten Blechbauteil gebildeten ersten Fischmauldichtung stromabwärts gelegenen Fischmauldichtung. Auch in diesem Fall fungiert der Axialflansch beispielhaft als Deflektor der Fischmauldichtung. Dem Axialflansch radial nach außen und gegenüber liegt wiederum die radial innere Plattform der Leitschaufelanordnung mit einer oder mehreren Leitschaufeln, an der das Bürstendichtungssystem über den Befestigungsabschnitt des zweiten Blechbauteils befestigt ist. Radial zwischen der inneren Plattform der Leitschaufelanordnung und dem Axialflansch kann ein Axialflansch einer stromabwärts angeordneten und benachbarten Laufschaufelanordnung mit einer oder mehreren Laufschaufeln angeordnet sein. Durch die Integration eines zweiten Axialflansches zur Ausbildung einer weiteren, stromabwärts gelegenen Fischmauldichtung ergibt sich vorteilhafterweise eine kompakte und integrale Bauweise des Bürstendichtungssystems mit integrierten Fischmauldichtungen, die wiederum einen im Vergleich zu bekannten Konstruktionen kleineren Bauraum benötigt.

Ein zweiter Aspekt der Erfindung betrifft eine thermische Gasturbine, insbesondere ein Flugzeugtriebwerk, mit mindestens einem Bürstendichtungssystem, welches gemäß dem ersten Erfindungsaspekt ausgebildet ist. Die sich hieraus ergebenden Merkmale und deren Vorteile sind den Beschreibungen des ersten zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der erfindungsgemäßen thermischen Gasturbine ist vorgesehen, dass das Bürstendichtungsgehäuse des Bürstendichtungssystems zur Abdichtung eines Spalts zwischen einem Rotor und einem Stator der Gasturbine am Stator festgelegt ist. Mit anderen Worten ist es vorgesehen dass das Bürstendichtungsgehäuse, mittelbar oder unmittelbar, an einem Stator der Gasturbine festgelegt ist, so dass die dem Bürstenkopf gegenüberliegenden Enden des Bürstenpakets auf einer zugeordneten Oberfläche des Rotors aufliegen. Dies stellt eine mechanisch besonders stabile und betriebssichere Anordnung des Bürstendichtungssystems dar.

Dabei hat es sich in weiterer Ausgestaltung als vorteilhaft gezeigt, wenn der Stator als Leitschaufel und/oder als Leitschaufelcluster und/oder als Leitschaufelkranz ausgebildet ist. Wenn der Stator in segmentierter Bauweise vorliegt, hat es sich als vorteilhaft gezeigt, wenn auch das Bürstendichtungssystem segmentiert ausgebildet ist, da hierdurch eine besonders einfache Montage und Demontage ermöglicht ist.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Schnittdarstellung eines erfindungsgemäßen Bürstendichtungssystems;
- Fig. 2: in schematischer Perspektivansicht einen Schnitt durch ein hier nicht beanspruchtes Bürstendichtungssystem; und
- Fig. 3: eine vergrößerte schematische Ansicht des in Fig. 3 gezeigten Details III.

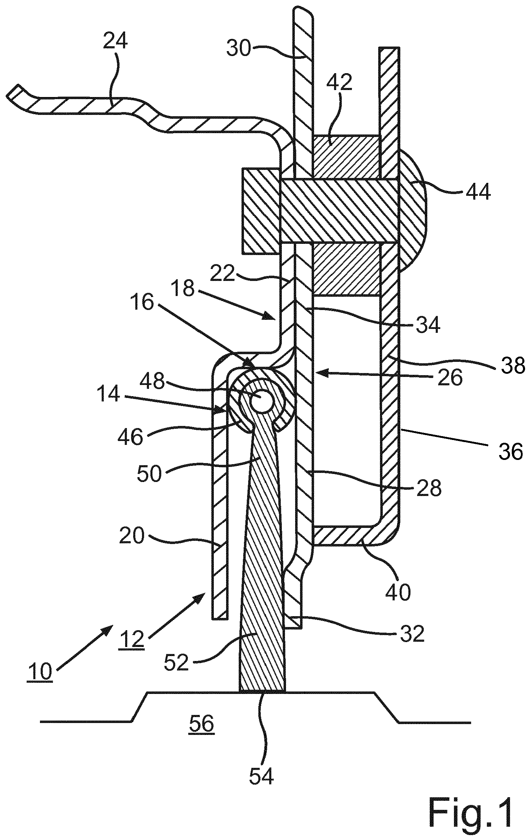

Fig. 1 zeigt eine schematische Schnittdarstellung eines Bürstendichtungssystems 10 gemäß einer Ausführungsform der vorliegenden Erfindung. Das Bürstendichtungssystem 10 dient zum Abdichten eines Spalts zwischen relativ zueinander bewegbaren Bauteilen einer Strömungsmaschine, insbesondere einer thermischen Gasturbine. Bei den zueinander bewegbaren Bauteilen handelt es sich gemäß dem Ausführungsbeispiel um einen Rotor und einen Stator eines Flugtriebwerks. Das Bürstendichtungssystem 10 umfasst dabei ein Bürstendichtungsgehäuse 12 zur Aufnahme eines Bürstenkopfs 14 einer Bürstendichtung 16. Das Bürstendichtungsgehäuse 12 umgreift dabei die Bürstendichtung 16 im Wesentlichen U-förmig. Man erkennt, dass das Bürstendichtungsgehäuse 12 zweiteilig ausgebildet ist und ein erstes Blechbauteil 18 mit einem Deckblechabschnitt 20 und ein zweites Blechbauteil 26 mit einem Stützblechabschnitt 28 umfasst. Mittels des Deckblechabschnitts 20 und des Stützblechabschnitts 28 wird die Aufnahme für den Bürstenkopf 14 der Bürstendichtung 16 ausgebildet. Das zweite Blechbauteil 26 ist dabei in Strömungsrichtung stromabwärts des ersten Blechbauteils 18 angeordnet. Das erste und zweite Blechbauteil 18, 26 können aber auch einstückig ausgebildet sein. In dem dargestellten Ausführungsbeispiel sind das erste und das zweite Blechbauteil 18, 26 formschlüssig miteinander verbunden.

Des Weiteren erkennt man, dass das erste Blechbauteil 18 an einem dem Deckblechabschnitt 20 gegenüberliegenden Ende einen Axialflansch 24 zur Ausbildung einer Fischmauldichtung umfasst. Der Begriff "Axialflansch" ist dabei derart auszulegen, dass sich der betreffende Flansch im Wesentlichen parallel zu einer Achse eines Rotors 56 der Strömungsmaschine erstreckt. Der Axialflansch 24 dient gemäß dem Ausführungsbeispiel als Deflektor der Fischmauldichtung. Dem Axialflansch 24 radial nach außen und gegenüber liegt eine radial innere Plattform einer Leitschaufelanordnung mit einer oder mehreren Leitschaufeln (nicht dargestellt), an der das Bürstendichtungssystem 10 befestigt ist. Radial zwischen der inneren Plattform der Leitschaufelanordnung und dem Axialflansch 24 kann ein Axialflansch einer stromaufwärts angeordneten und benachbarten Laufschaufelanordnung mit einer oder mehren Laufschaufeln angeordnet sein (nicht dargestellt).

Des Weiteren erkennt man, dass das zweite Blechbauteil 26 an einem dem Stützblechabschnitt 28 gegenüberliegenden Ende einen Befestigungsabschnitt 30 zur mittelbaren oder unmittelbaren Befestigung des Bürstendichtungssystems 10 an der Leitschaufelanordnung der Strömungsmaschine (nicht dargestellt) aufweist. Zudem weist das Bürstendichtungssystem 10 ein Versteifungselement 36 auf, welches am zweiten Blechbauteil 26 im Bereich des Stützblechabschnitts 28 über ein Anlageelement 40 angelegt ist. Das Versteifungselement 36 weist zudem ein Grundelement 38 auf, welches sich in dem dargestellten Ausführungsbeispiel in radialer Richtung im Wesentlichen parallel zu einem Mittelabschnitt 34 des zweiten Blechbauteils 26 erstreckt. Das Versteifungselement 36 ist als etwa J-förmig gebogenes Metallblech ausgebildet und über eine Niete 44 mit dem zweiten Blechbauteil 26 verbunden. Zwischen dem Versteifungselement 36 und dem zweiten Blechbauteil 26 ist zusätzlich ein als Gleitstein ausgebildetes Gleitelement 42 angeordnet und ebenfalls mittels der Niete 44 am Bürstendichtungssystem 10 festgelegt. Zudem ist über die Niete 44 ein Radialflansch 22, der zwischen dem Deckblechabschnitt 20 und dem Axialflansch 24 als integraler Bestandteil des ersten Blechbauteils 18 ausgebildet ist, mit dem ersten Blechbauteil 18 und dem Versteifungselement 36 verbunden. Das Gleitelement 42 stellt eine Lagerstelle mit einem translatorischen Freiheitsgrad zur Speichenzentrierung des Bürstendichtungssystems 10 dar. Das Gleitelement 42 greift hierzu bei der Montage in eine entsprechende Nut an der Leitschaufel, einem Leitschaufelcluster oder einem Leitschaufelkranz (nicht dargestellt) ein. Durch die Speichenzentrierung des Bürstendichtungssystems 10 sind durch thermische Einflüsse bedingte relative Maßänderungen zwischen Stator und Rotor 56 besser ausgleichbar. Grundsätzlich ist das erfindungsgemäße Bürstendichtungssystem 10 jedoch nicht auf diese Montageart beschränkt.

Der Stützblechabschnitt 28 weist in dem dargestellten Ausführungsbeispiel zudem ein Stützelement 32 auf, welches mit dem Stützblechabschnitt 28 einstückig ausgebildet ist. Das Stützelement 32 dient zur Anlage an einem Bürstenpaket 52 der Bürstendichtung 16.

Des Weiteren erkennt man, dass der Bürstenkopf 14 aus einem Klemmrohr 46, mittels welchem Faser- oder Drahtbündel 50 an einem Kerndraht 48 fixiert sind, besteht. Die Faser- oder Drahtbündel 50 ragen aus dem Bürstendichtungsgehäuse 12 und bilden das Bürstenpaket 52, dessen Endbereich 54 mit einer zugeordneten Dichtfläche des Rotors 56 in Anlage gebracht werden kann, um einen ringförmigen Spalt zwischen Stator und Rotor 56 abzudichten. Um das Bürstenpaket 52 gegen durch biegen in axialer Richtung des zugeordneten Flugzeugtriebwerks auftretende Druckdifferenzen zu sichern, dient der Stützblechabschnitt 28 mit dem Stützelement 32. Das Stützelement 32 kommt zur Anlage an das Bürstenpaket 52.

Insgesamt kann das Bürstendichtungssystem 10 ringsegmentförmig ausgebildet sein.

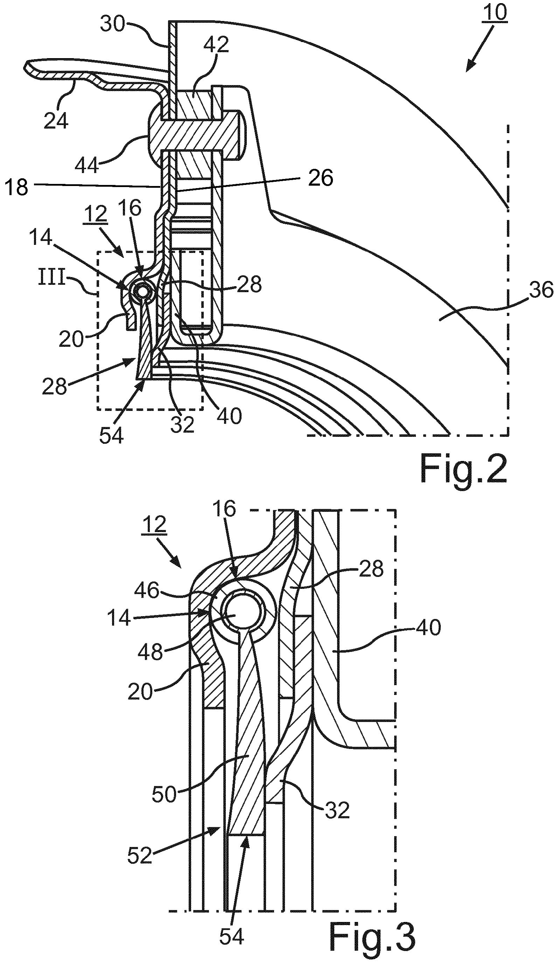

Fig. 2 zeigt in einer schematischen Perspektivansicht einen Schnitt durch ein Bürstendichtungssystem einer nicht beanspruchten Ausgestaltung und wird im Folgenden in Zusammenschau mit Fig. 3 erläutert werden, in welcher eine vergrößerte schematische Ansicht des in Fig. 2 gezeigten Details III abgebildet ist. Im Unterschied zu der in Fig. 1 dargestellten Ausführungsform des Bürstendichtungssystems 10 ist bei der hier dargestellten Ausgestaltung des Bürstendichtungssystems 10 das Stützelement 32 als separates Element ausgebildet. Zudem erkennt man, dass der Deckblechabschnitt 20 des ersten Blechbauteils 18 radial unterhalb des Bürstenkopfs 14 nach innen gebogen ist, so dass der Bürstenkopf 14 und damit die Bürstendichtung 16 unverlierbar im Bürstendichtungsgehäuse 12 gehalten und lagegesichert ist. Alternativ oder zusätzlich kann die Bürstendichtung 16 auch zwischen dem Deckblechabschnitt 20 und dem Stützblechabschnitt 28 eingeklemmt werden, wie dies in Fig. 1 dargestellt ist. Der Bürstenkopf 14 besteht wiederum aus dem Klemmrohr 46, mittels welchem das Faser- oder Drahtbündel 50 an dem Kerndraht 48 fixiert sind. Die Faser- oder Drahtbündel 50 ragen aus dem Bürstendichtungsgehäuse 12 und bilden das Bürstenpaket 52, dessen Endbereich 54 wiederum mit einer zugeordneten Dichtfläche eines Rotors (nicht dargestellt) in Anlage gebracht werden kann, um einen ringförmigen Spalt zwischen Stator und Rotor abzudichten.

Das Stützelement 32, welches einen in Strömungsrichtung betrachtet stromauf gebogenen Endbereich aufweist, an welchem das Bürstenpaket 52 anliegt, ist außerhalb des Bürstendichtungsgehäuses 12 angeordnet und zwischen dem zweiten Blechbauteil 26 des Bürstendichtungsgehäuses 12 und dem Versteifungselement 36 eingeklemmt und hierdurch lagegesichert. Durch diese formschlüssige Verbindung wird ein Austausch des Stützelements 32 erleichtert. Alternativ oder zusätzlich kann das Stützelement 32, welches analog zum Bürstendichtungssystem 10 vorliegend ebenfalls ringsegmentförmig ausgebildet ist, auch stoffschlüssig mit dem zweiten Blechbauteil 26 und/oder dem Versteifungselement 36 verbunden werden. Das Versteifungselement 36 weist gemäß dieser Ausführungsform ein etwa U-förmiges Anlageelement 40 auf, wobei ein Schenkel zumindest teilweise an einem entsprechenden Bereich des zweiten Blechbauteils 26 anliegt. Das Versteifungselement 36 ist wiederum als gebogenes Metallblech ausgebildet und über die Niete 44 mit dem Bürstendichtungsgehäuse 12, das heißt mit dem ersten und zweiten Blechbauteil 18, 26 verbunden. Zwischen dem Versteifungselement 36 und dem zweiten Blechbauteil 26 ist wiederum ein als Gleitstein ausgebildetes Gleitelement 42 angeordnet und ebenfalls mittels der Niete 44 am Bürstendichtungssystem 10 festgelegt.

Wie man insbesondere in Fig. 3 erkennt, ist der radial innenliegende Endbereich des Stützelements 32 näher an einem dem Bürstenkopf 14 gegenüberliegenden Endbereich des Bürstenpakets 52 angeordnet als der entsprechende, radial innenliegende Endbereich des zweiten Blechbauteils 26. Hierdurch ist sichergestellt, dass im Fall eines Anstreifens am Rotor nur das Stützelement 32, nicht das zweite Blechbauteil 26 oder das Bürstendichtungsgehäuse 12 selbst betroffen wird. Aufgrund der separaten Ausbildung des Stützelements 32 werden eine Reparatur oder ein Austausch des Stützelements 32 nach einer Beschädigung erheblich erleichtert.

Indem das zweite Blechbauteil 26 und das Stützelement 32 als separate Bauteile ausgeführt sind, ist zudem eine Trennung der Funktionalitäten "Einhausung bzw. Lagesicherung der Bürstendichtung 16" und "Abstützung des Bürstenpakets 52" gegeben. Durch diese Funktionstrennung können die Werkstoffe für das zweite Blechbauteil 26 sowie für das separate Stützelement 32 unabhängig voneinander gewählt werden. Beispielsweise kann das Stützelement 32 aus einem weicheren Material bestehen als das zweite Blechbauteil 26, um ein anstreiftoleranteres Verhalten des Bürstendichtungssystems 10 sicherzustellen. Grundsätzlich muss das Stützelement 32 auch nicht als Blech- bzw. Metallteil ausgebildet sein, sondern kann beispielsweise aus einem keramischen Material bzw. einem keramische Faserverbundwerkstoff oder dergleichen bestehen. Weitere Vorteile der Separierung bestehen in der Erhöhung der konstruktiven und geometrischen Gestaltungsfreiheit, so dass beispielsweise unterschiedliche Wandstärken, ein unterschiedliches strukturmechanisches Verhalten im Betrieb, unterschiedliche Dichtwirkungen und dergleichen auf konstruktiv einfache und kostengünstige Art verwirklicht werden können.

Das in den Figuren 2 und 3 dargestellte Bürstendichtungssystem 10 mit einem separat ausgebildeten Stützelement 32 kann nach folgendem Verfahren hergestellt werden: Bereitstellen des Bürstendichtungsgehäuses 12 umfassend das erste und zweite Blechbauteil 18, 26, Anordnen der Bürstendichtung 16, so dass zumindest der Bürstenkopf 14 der Bürstendichtung 16 im Bürstendichtungsgehäuse 12 aufgenommen und lagegesichert wird, Bereitstellen des separat ausgebildeten Stützelements 32 und Anordnen des Stützelements 32 am zweiten Blechbauteil 26 des Bürstendichtungsgehäuses 12, so dass das vom Bürstenkopf 14 der Bürstendichtung 16 abragendes Bürstenpaket 52 durch das Stützelement 32 gegen Durchbiegung abstützbar ist. Eine Demontage des Bürstendichtungssystems 10 kann dabei grundsätzlich in umgekehrter Reihenfolge vorgenommen werden.

### Bezugszeichenliste:

- 10: Bürstendichtungssystem
- 12: Bürstendichtungsgehäuse
- 14: Bürstenkopf
- 16: Bürstendichtung
- 18: Erstes Blechbauteil
- 20: Deckblechabschnitt
- 22: Radialflansch
- 24: Axialflansch
- 26: Zweites Blechbauteil
- 28: Stützblechabschnitt
- 30: Befestigungsabschnitt
- 32: Stützelement
- 34: Mittelabschnitt
- 36: Versteifungselement
- 38: Grundelement
- 40: Anlageelement
- 42: Gleitelement
- 44: Niete
- 46: Klemmrohr
- 48: Kerndraht
- 50: Faser- und Drahtbündel
- 52: Bürstenpaket
- 54: Endbereich Bürstenpaket
- 56: Rotor

## Patentansprüche

1. Bürstendichtungssystem (10) zum Abdichten eines Spalts zwischen relativ zueinander bewegbaren Bauteilen einer Strömungsmaschine, insbesondere einer thermischen Gasturbine, umfassend ein Bürstendichtungsgehäuse (12), welches zumindest einen Bürstenkopf (14) einer Bürstendichtung (16) aufnimmt,
wobei das Bürstendichtungsgehäuse (12) ein erstes Blechbauteil (18) mit einem Deckblechabschnitt (20) und ein zweites Blechbauteil (26) mit einem Stützblechabschnitt (28) umfasst,
wobei das erste Blechbauteil (18) an einem dem Deckblechabschnitt (20) gegenüberliegenden Ende einen Axialflansch (24) zur Ausbildung einer Fischmauldichtung umfasst, wobei der Stützblechabschnitt (28) des zweiten Blechbauteils (26) ein Stützelement (32) zur Anlage an einem Bürstenpaket (52) der Bürstendichtung (16) aufweist und das Stützelement (32) einstückig mit dem Stützblechabschnitt (28) ausgebildet ist,
wobei das zweite Blechbauteil (26) an einem dem Stützblechabschnitt (28) gegenüberliegenden Ende einen Befestigungsabschnitt (30) zur mittelbaren oder unmittelbaren Befestigung des Bürstendichtungssystems (10) an einer Leitschaufel oder einem Leitschaufelcluster der Strömungsmaschine umfasst,
**dadurch gekennzeichnet,**
**dass** dieses mindestens ein Versteifungselement (36) umfasst, welches am zweiten Blechbauteil (26) im Bereich des Stützblechabschnitts (28) festgelegt ist und
**dass** das Versteifungselement (36) als gebogenes Metallblech ausgebildet ist.

2. Bürstendichtungssystem (10) nach Anspruch 1, **dadurch gekennzeichnet, dass** das Versteifungselement (36) mit dem zweiten Blechbauteil (26) des Bürstendichtungsgehäuses (12) vernietet ist und/oder dass zwischen dem Versteifungselement (36) und dem zweiten Blechbauteil (26) des Bürstendichtungsgehäuses (12) wenigstens ein Gleitelement (42), insbesondere ein Gleitstein angeordnet ist.

3. Bürstendichtungssystem (10) nach Anspruch 2, **dadurch gekennzeichnet, dass** das Gleitelement (42) als Lagerstelle mit einem translatorischen Freiheitsgrad zur Speichenzentrierung des Bürstendichtungssystems (10) ausgebildet ist.

4. Bürstendichtungssystem (10) nach einem der vorhergehenden Ansprüche, **dadurch gekennzeichnet, dass** das erste und zweite Blechbauteil (18, 26) als separate Bauteile oder einstückig ausgebildet sind.

5. Bürstendichtungssystem (10) nach Anspruch 4, **dadurch gekennzeichnet, dass** das erste und zweite Blechbauteil (18, 26) formschlüssig und/oder stoffschlüssig miteinander verbunden sind.

6. Bürstendichtungssystem (10) nach einem der Ansprüche 1 bis 5, **dadurch gekennzeichnet, dass** das Versteifungselement (36) an einem dem Anlageelement (40) gegenüberliegenden Ende einen Axialflansch zur Ausbildung einer weiteren Fischmauldichtung umfasst.

7. Thermische Gasturbine, insbesondere Flugzeugtriebwerk, mit mindestens einem Bürstendichtungssystem (10), welches gemäß einem der Ansprüche 1 bis 6 ausgebildet ist.

8. Thermische Gasturbine nach Anspruch 7, **dadurch gekennzeichnet, dass** das Bürstendichtungsgehäuse (12) des Bürstendichtungssystems (10) zur Abdichtung eines Spalts zwischen einem Rotor und einem Stator der Gasturbine am Stator festgelegt ist.

9. Thermische Gasturbine nach Anspruch 8, **dadurch gekennzeichnet, dass** der Stator als Leitschaufel und/oder als Leitschaufelcluster und/oder als Leitschaufelkranz ausgebildet ist.

## Claims

1. Brush seal system (10) for sealing a gap between components of a turbomachine, in particular a thermal gas turbine, that can move relative to one another, comprising a brush seal housing (12) which receives at least one brush head (14) of a brush seal (16),
the brush seal housing (12) comprising a first sheet metal component (18) having a cover plate portion (20), and a second sheet metal component (26) having a support plate portion (28),
the first sheet metal component (18) comprising an axial flange (24), at an end opposite the cover plate portion (20), for forming a fish-mouth seal,
the support plate portion (28) of the second sheet metal component (26) having a support element (32) for contact with a brush pack (52) of the brush seal (16) and the support element (32) being formed in one piece with the support plate portion (28),
the second sheet metal component (26) comprising a fastening portion (30), on an end opposite the support plate portion (28), for indirectly or directly fastening the bru sh seal system (10) to a guide vane or a guide vane cluster of the turbomachine,
**characterized in that** said system comprises at least one reinforcing element (36) which is fixed to the second sheet metal component (26) in the region of the support plate portion (28), and **in that** the reinforcing element (36) is designed as a bent metal sheet.

2. Brush seal system (10) according to claim 1, **characterized in that** the reinforcing element (36) is riveted to the second sheet metal component (26) of the brush seal housing (12) and/or **in that** at least one sliding element (42), in particular a sliding block, is arranged between the reinforcing element (36) and the second sheet metal component (26) of the brush seal housing (12).

3. Brush seal system (10) according to claim 2, **characterized in that** the sliding element (42) is designed as a bearing point having a translational degree of freedom for spoke centering of the brush seal system (10).

4. Brush seal system (10) according to one of the preceding claims, **characterized in that** the first and second sheet metal components (18, 26) are designed as separate components or in one piece.

5. Brush seal system (10) according to claim 4, **characterized in that** the first and second sheet metal components (18, 26) are connected to one another in a form-fitting and/or materially bonded manner.

6. Brush seal system (10) according to one of claims 1 to 5, **characterized in that** the reinforcing element (36) comprises an axial flange, at an end opposite the contact element (40), for forming a further fish-mouth seal.

7. Thermal gas turbine, in particular an aircraft engine, comprising at least one brush seal system (10) which is designed according to one of claims 1 to 6.

8. Thermal gas turbine according to claim 7, **characterized in that**, in order to seal a gap between a rotor and a stator of the gas turbine, the brush seal housing (12) of the brush seal system (10) is fixed on the stator.

9. Thermal gas turbine according to claim 8, **characterized in that** the stator is designed as a guide vane and/or as a guide vane clusterand/oras a guide vane ring.

## Revendications

1. Système de joint à brosse (10) permettant de sceller un espace entre des pièces d'une turbomachine, pouvant se déplacer les unes par rapport aux autres, en particulier d'une turbine à gaz thermique, comprenant un boîtier de joint à brosse (12) qui reçoit au moins une tête de brosse (14) d'un joint à brosse (16),
le boîtier de joint à brosse (12) comprenant une première pièce en tôle (18) comportant une section de tôle de recouvrement (20) et une seconde pièce en tôle (26) comportant une section de tôle de support (28),
la première pièce en tôle (18) comprenant une bride axiale (24) à une extrémité opposée à la section de tôle de recouvrement (20) permettant de former un joint en gueule de poisson, la section de tôle de support (28) de la seconde partie en tôle (26) présentant un élément de support (32) permettant l'appui du joint à brosse (16) sur un paquet de brosses (52) et l'élément de support (32) étant formé d'une seule pièce avec la section de tôle de support (28),
la seconde pièce en tôle (26) comprenant une section de fixation (30) à une extrémité opposée à la section de tôle de support (28) permettant la fixation directe ou indirecte du système de joint à brosse (10) sur une aube de guidage ou un groupe d'aubes de guidage de la turbomachine,
**caractérisé en ce**
**que** ledit système de joint à brosse comprend au moins un élément de raidissement (36) qui est fixé sur la seconde pièce en tôle (26) dans la zone de la section de tôle de support (28) et
**que** l'élément de renforcement (36) est conçu comme une tôle en métal courbée.

2. Système de joint à brosse (10) selon la revendication 1, **caractérisé en ce que** l'élément de raidissement (36) est riveté sur la seconde pièce en tôle (26) du boîtier de joint à brosse (12) et/ou **en ce qu'**un élément coulissant (42), en particulier un bloc coulissant, est agencé entre l'élément de raidissement (36) et la seconde pièce en tôle (26) du boîtier de joint à brosse (12).

3. Système de joint à brosse (10) selon la revendication 2, **caractérisé en ce que** l'élément coulissant (42) est conçu comme un point d'appui avec un degré de liberté de translation permettant de centrer des rayons du système de joint à brosse (10).

4. Système de joint à brosse (10) selon l'une des revendications précédentes, **caractérisé en ce que** les première et seconde pièces en tôle (18, 26) sont formées en tant que pièce séparées ou d'une seule pièce.

5. Système de joint à brosse (10) selon la revendication 4, **caractérisé en ce que** les première et seconde pièces en tôle (18, 26) sont reliées l'une à l'autre par complémentarité de forme et/ou par liaison de matière.

6. Système de joint à brosse (10) selon l'une des revendications 1 à 5, **caractérisé en ce que** l'élément de raidissement (36) comprend une bride axiale à une extrémité opposée à l'élément d'appui (40) permettant de former un autre joint en gueule de poisson.

7. Turbine à gaz thermique, en particulier moteur d'aéronef, comportant au moins un système de joint à brosse (10) conçu selon l'une des revendications 1 à 6.

8. Turbine à gaz thermique selon la revendication 7, **caractérisée en ce que** le boîtier de joint à brosse (12) du système de joint à brosse (10) est fixé sur le stator pour scelle r un espace entre un rotor et un statorde la turbine à gaz.

9. Turbine à gaz thermique selon la revendication 8, **caractérisée en ce que** le stator est conçu comme une aube de guidage et/ou comme un groupe d'aubes de guidage et/ou comme une couronne d'aube de guidage.
